(19) Europäisches Patentamt
European Patent Office
Office européen des brevets

(11) EP 1 812 838 B1

(12) **FASCICULE DE BREVET EUROPEEN**

(45) Date de publication et mention
de la délivrance du brevet:
**17.03.2010 Bulletin 2010/11**

(21) Numéro de dépôt: **05803090.9**

(22) Date de dépôt: **16.11.2005**

(51) Int Cl.:
*G05D 16/20* (2006.01)    *B29C 49/78* (2006.01)

(86) Numéro de dépôt international:
**PCT/IB2005/003420**

(87) Numéro de publication internationale:
**WO 2006/054146 (26.05.2006 Gazette 2006/21)**

(54) **DISPOSITIF A ELECTROVANNE AUTO CONTROLE**

**SELBSTGESTEUERTE MAGNETVENTILEINRICHTUNG**

**SELF-CONTROLLED SOLENOID VALVE DEVICE**

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **19.11.2004 FR 0412297**

(43) Date de publication de la demande:
**01.08.2007 Bulletin 2007/31**

(73) Titulaire: **PARKER-LUCIFER S.A.**
**1227 Carouge (CH)**

(72) Inventeurs:
• **FORESTIER, Thierry**
**01200 BELLEGARDE (FR)**
• **GATTOLLIAT, André**
**1212 Grand-Lancy (CH)**

(74) Mandataire: **Bugnion Genève**
**BUGNION S.A.**
**Case 375**
**1211 Genève 12 (CH)**

(56) Documents cités:
**EP-A- 1 155 808    GB-A- 1 600 523**
**GB-A- 2 129 170    US-B1- 6 576 171**

EP 1 812 838 B1

## Description

L'invention concerne un dispositif à électrovanne destiné aux applications nécessitant un bon contrôle d'une courbe d'évolution de pression provoquée par des phases d'ouvertures ou de fermetures de l'électrovanne. Ce dispositif est plus particulièrement adapté à une application pour la phase de pré-soufflage ou plus généralement pour le soufflage du procédé de fabrication des bouteilles en PET. L'invention concerne aussi un procédé associé.

Dans l'art antérieur, la phase de pré-soufflage du procédé de fabrication des bouteilles en PET se déroule de la manière suivante :

- une électrovanne, reliée à une ébauche de bouteille à fabriquer, reçoit du système global de fabrication de bouteilles un signal électrique d'ouverture. Suite à cet ordre, elle s'ouvre et laisse passer un gaz, provenant d'une source à basse pression, par exemple de 3 bars, qui pénètre alors dans l'ébauche de bouteille. Il existe un temps de réaction de l'électrovanne et l'instant réel de début de la phase de pré-soufflage est décalé par rapport au signal du système global ;
- la pression monte alors progressivement dans la bouteille selon une pente particulière jusqu'à atteindre la pression finale de pré-soufflage égale à 3 bars dans cet exemple.

De manière simultanée et coordonnée au fonctionnement de l'électrovanne et à la montée de la pression du gaz dans la bouteille, une tige d'étirage pousse le fond de la bouteille durant toute cette phase pour donner à la bouteille la forme souhaitée.

Les électrovannes de l'art antérieur présentent les inconvénients suivants pour cette application :

- en fonction de leur usure et particularités individuelles, le temps qui s'écoule entre le signal du système global et l'ouverture réelle de l'électrovanne est variable et change en fonction du temps pour une électrovanne donnée. Par conséquent, il existe une incertitude sur l'instant initial du pré-soufflage, ce qui ne permet pas d'atteindre une bonne coordination avec le mouvement de la tige d'étirage et de bien maîtriser le processus de fabrication d'une bouteille ;
- de même, la pente de montée de la pression n'est pas parfaitement maîtrisée. Elle est aujourd'hui modifiable par le réglage manuel d'une restriction placée en entrée de l'électrovanne. Toutefois, ce réglage est effectué manuellement et de manière intuitive par un opérateur, sur la base d'un diagnostic réalisé visuellement par l'opérateur en fonction des bouteilles obtenues. Le résultat est une pente peu maîtrisée et il existe donc une incertitude sur la durée de la phase de pré-soufflage, ce qui entraîne les mêmes problèmes que ceux du point précédent ;
- enfin, la fin de cette phase est atteinte lorsque la pression est stabilisée à la valeur de la pression de la source de gaz, c'est à dire 3 bar selon l'exemple précédent. Après cette phase de pré-soufflage, le procédé de fabrication des bouteilles se poursuit avec un soufflage d'un gaz à haute pression. L'électrovanne doit donc obligatoirement fonctionner avec deux sources différentes de pression, ce qui est un inconvénient.

L'invention a pour but de proposer un dispositif à électrovanne et un procédé de soufflage qui ne présentent pas les inconvénients susmentionnés.

Plus précisément, un premier objet de l'invention consiste à proposer un dispositif à électrovanne permettant de mieux contrôler la phase de montée de la pression suite à un ordre d'ouverture.

Un second objet de l'invention consiste à proposer un dispositif à électrovanne permettant un fonctionnement avec éventuellement une seule source de haute pression.

Un troisième objet de l'invention consiste à proposer un procédé de soufflage mieux maîtrisé, adapté par exemple pour la fabrication d'une bouteille en PET.

Selon l'invention ces objets sont obtenus par un procédé selon la revendication 1 et un dispositif selon la revendication 7.

Le dispositif de commande peut comprendre un microprocesseur apte à mettre en oeuvre un logiciel de contrôle et une mémoire apte à stocker un historique des valeurs mesurées. De plus, le dispositif de commande peut comprendre une liaison avec l'extérieur apte à recevoir un signal de commande d'ouverture.

La restriction peut comprendre un moyen d'équilibrage de pression favorisant l'action de l'actionneur, ce dernier pouvant être un moteur pas à pas linéaire selon une variante de réalisation.

L'électrovanne peut comprendre un claper anti-retour.

Le procédé de soufflage peut comprendre la mesure périodique de la pression par un capteur de pression, la transmission des valeurs vers le dispositif de commande et le stockage de certaines de ces valeurs ainsi que le temps associé.

Il peut aussi comprendre les étapes initiales suivantes :

- signal de commande d'ouverture transmis au dispositif à électrovanne ;

- signal de commande d'ouverture transmis par un dispositif de commande à l'électrovanne après un temps mort déterminé ;

et **caractérisé en ce qu'**un réajustement du temps mort est réalisé pour assurer une durée constante entre le signal de commande d'ouverture du système extérieur et l'instant réel de début de la phase de pré-soufflage.

Selon un mode d'exécution, le procédé de soufflage comprend un réajustement, en cas de déviation de la pente de la courbe de pression, qui consiste en un ordre transmis par le dispositif de commande à un actionneur linéaire afin de modifier le réglage d'une restriction.

Selon un mode d'exécution, le procédé de soufflage comprend un réajustement, en cas de déviation de la pression finale de soufflage, qui consiste en la modification de l'instant de transmission de l'ordre de fermeture de l'électrovanne.

Selon l'invention, ce procédé peut être appliqué à la fabrication des bouteilles en PET.

Ces objets, caractéristiques et avantages de la présente invention seront exposés en détail dans la description suivante d'un mode d'exécution particulier fait à titre non-limitatif en relation avec les figures jointes parmi lesquelles :

La figure 1 représente un schéma fonctionnel d'un dispositif à électrovanne selon un mode d'exécution de l'invention ;

la figure 2 représente une courbe de pression ainsi que les signaux du système et du dispositif de commande en fonction du temps, selon le procédé de l'invention ;

la figure 3 représente une vue en coupe d'un dispositif à électrovanne selon un mode d'exécution ;

la figure 4 représente un organigramme représentant les différentes phases de fonctionnement d'un dispositif selon l'invention.

Un mode d'exécution particulier de l'invention pour une application dans le domaine de la fabrication des bouteilles en PET est décrit ci-après.

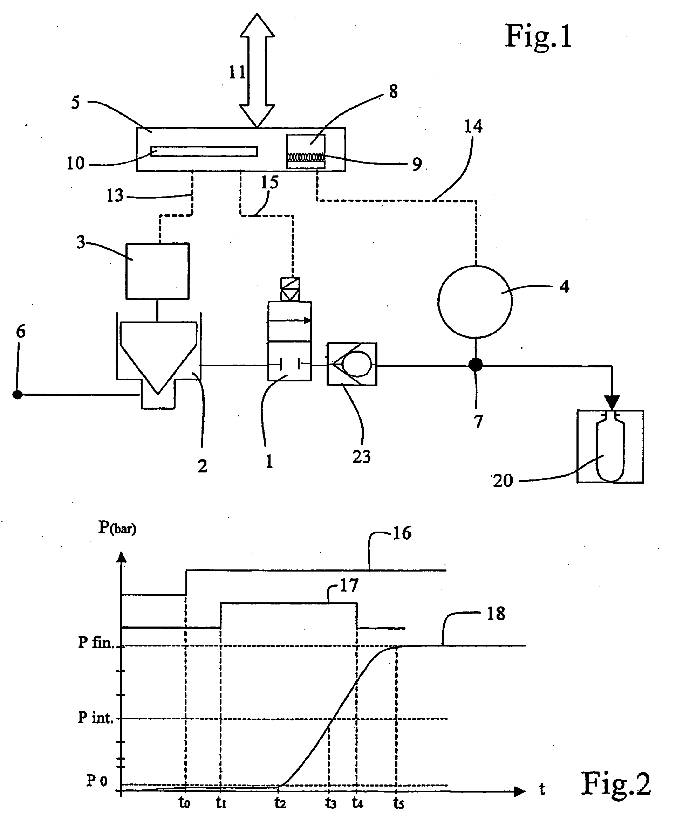

Selon ce mode d'exécution représenté sur le schéma fonctionnel de la figure 1, le dispositif à électrovanne comprend une électrovanne 1, une restriction 2, un actionneur 3 pour la restriction 2, un capteur de pression 4 et un dispositif de commande 5. Le dispositif à électrovanne est relié en entrée 6 à une source de gaz, le gaz pouvant être conduit successivement à travers la restriction 2, l'électrovanne 1, le capteur de pression 4, pour finalement atteindre la sortie 7 du dispositif, reliée par exemple à une ébauche de bouteille en PET 20 à fabriquer. Le dispositif de commande 5 est un dispositif électronique essentiellement composé d'un microprocesseur 8 exécutant un logiciel 9, d'une mémoire 10 et d'une horloge non représentée. Il peut échanger des données avec le système extérieur par une liaison 11, et est relié à l'actionneur 3 (liaison 13), à l'électrovanne 1 (liaison 15) et au capteur 4 (liaison 14).

Lors de chaque phase de pré-soufflage d'une bouteille en PET, représentée par le diagramme temporel de la figure 2, le dispositif de commande reçoit un signal du système extérieur par la liaison 11, à un instant t0, représenté sur la courbe 16 de la figure 2, lui donnant le feu vert pour initier le cycle de pré-soufflage. Le dispositif de commande 5 transmet alors l'ordre à l'électrovanne par la liaison 15, à l'instant t1 représenté par la courbe 17 de la figure 2, après l'écoulement d'un temps mort t1-t0, compris entre 20 et 50 millisecondes.

Ensuite, le capteur 4 mesure la pression périodiquement, toutes les 500 microsecondes par exemple, et transmet les mesures par la liaison 14 au dispositif de commande 5. Ce dernier stocke dans la mémoire 10 certains couples de valeur de la pression et du temps associé, selon un rythme prédéfini. Par exemple, les temps pour les valeurs de pression de 0.5 bar, 3 bars, et 6 bars peuvent être mémorisés dans une mise en oeuvre dans laquelle la pression finale souhaitée est égale à 6 bars. La mémoire 10 va ainsi conserver en mémoire ces valeurs pour élaborer un historique, comprenant par exemple les valeurs des dix derniers cycles de pré-soufflage.

Enfin, à un instant prédéfini t4, le dispositif de commande 5 transmet à l'électrovanne 1 un signal de fermeture. La pression se stabilise alors progressivement au temps t5 à une valeur finale de 6 bars. La courbe de pression 18 obtenue est illustrée sur la figure 2.

Entre deux cycles de pré-soufflage, le logiciel 9 du dispositif de commande 5 analyse les dernières données enregistrées et les compare à l'historique déjà mémorisé. Cette analyse s'intéresse aux données suivantes :

- la durée entre le signal d'ouverture du système global et le début réel du cycle de pré-soufflage, égale au calcul t2-t0, t2 étant détecté pour une valeur P0 très basse de la pression, de 0.5 bar dans cet exemple. En cas de déviation de cette donnée, détectée par l'analyse de l'historique, le logiciel 9 prend une mesure de réajustement qui consiste en la modification de la durée entre la réception du signal de départ du système et l'émission du signal d'ouverture par le dispositif de commande (temps mort t1-t0). Ce réajustement a pour objectif de garantir une durée rigoureusement constante entre le signal de départ donné par le système et le début réel du pré-soufflage (t2-t0). Ce réajustement peut être réalisé par le calcul suivant mis en oeuvre par le logiciel 9 :

$$T1n = T1n\text{-}1 + (T2\text{-}T2n\text{-}1),$$

où

T1n : représente la durée (t1-t0) entre le signal du système et le signal d'ouverture pour le prochain cycle n ;

T1n-1 : représente cette durée au cycle n-1 ;

T2 : représente la durée (t2-t0) entre le signal d'ouverture du système global et le début réel du cycle de pré-soufflage souhaitée ;

T2n-1 : représente la durée (t2-t0) entre le signal d'ouverture du système global et le début réel du cycle de pré-soufflage mesurée au cycle n-1 ;

- la pente de la courbe de montée de la pression, calculée à l'aide de la mesure de la pression intermédiaire Pint de 3 bars (à t=t3) et de la mesure du point initial de la courbe (à t=t2). De même que pour la donnée précédente, le logiciel 9 détectera une éventuelle déviation de cette donnée et prendra alors si besoin une mesure de réajustement. Pour cela, il agira sur le réglage de la position de la restriction 2 en envoyant des ordres par la liaison 13 à l'actionneur 3, qui permet un réglage automatique. Un exemple d'un tel réajustement consiste à appliquer la formule suivante :

$$Position\_rest\_n = Position\_rest\_n\text{-}1 + G1 (T3 - T3n\text{-}1) ;$$

avec

Position_rest_n : représente la position de la restriction pour le prochain cycle ;

Position_rest_n-1 : représente cette même valeur au cycle précédent ;

G1 : représente un coefficient linéaire ou en variante un gain complexe (par exemple un correcteur PID);

T3 : représente la durée (t3-t2) entre le début réel de la montée de pression et la pression intermédiaire Pint de 3 bars ;

T3n-1 : représente cette même durée mesurée au cycle précédent ;

- la pression finale Pfin de pré-soufflage, qui dépend de l'instant t4 de fermeture de l'électrovanne, pour une pression en entrée constante et une pente de montée en pression constante. De même que pour les deux données précédentes, le logiciel 9 détectera une éventuelle déviation de cette donnée et réajustera l'instant de fermeture de l'électrovanne, selon par exemple le calcul suivant :

$$T4n = T4n\text{-}1 + G2 (Pfin - Pfin\_n\text{-}1) ;$$

avec,

T4n : représente la durée (t4-t1) entre les signaux de fermeture et d'ouverture de l'électrovanne ;

T4n-1 : représente cette même durée au cycle précédent ;

G2 : représente un coefficient linéaire ou en variante un gain complexe (par exemple un correcteur PID) ;

Pfin : représente la pression finale souhaitée, de 6 bars dans cet exemple ;

Pfin_n-1 : représente la pression finale mesurée au cycle n-1.

Toutes ces mesures et données sont illustrées sur la figure 2 sur laquelle la première courbe 16 correspond au signal provenant du système global, extérieur au dispositif à électrovanne de l'invention, montrant un signal d'ouverture au temps t0. La second courbe 17 correspond aux signaux de commande d'ouverture et fermeture de l'électrovanne émis par le dispositif de commande 5 respectivement aux temps t1 et t4, et la troisième courbe 18 illustre la montée en pression mesurée par le capteur 4 en sortie d'électrovanne.

Le principe de fonctionnement du dispositif est donc basé sur son contrôle entre chacune de ses utilisations, sur la base d'un suivi historique de données le caractérisant. Ce principe est différent d'un contrôle en temps réel en fonction d'une courbe théorique de référence. Les calculs mentionnés dans l'exemple précédent peuvent être différents, tenir compte par exemple de valeurs de plusieurs cycles passés, utilisés des équations plus complexes et non obligatoirement linéaires, pour s'adapter notamment aux caractéristiques du matériel utilisé. Le procédé peut ainsi permettre d'obtenir des bons résultats même en présence d'une valeur fluctuante de la haute pression d'entrée, l'influence étant atténuée par le calcul de régulation choisi. En remarque, les résultats mesurés lors d'événements exceptionnels comme la cassure de la bouteille ne sont pas enregistrés car non significatifs et un signal de sortie indique au client que le profil de pression souhaité n'a pas été réalisé selon les critères d'acceptabilités définis (tolérances) pour lui permettre de faire un tri automatique des bouteilles (mise au rebus en cas de défaut) et/ou de pas effectuer la phase de soufflage suivante..

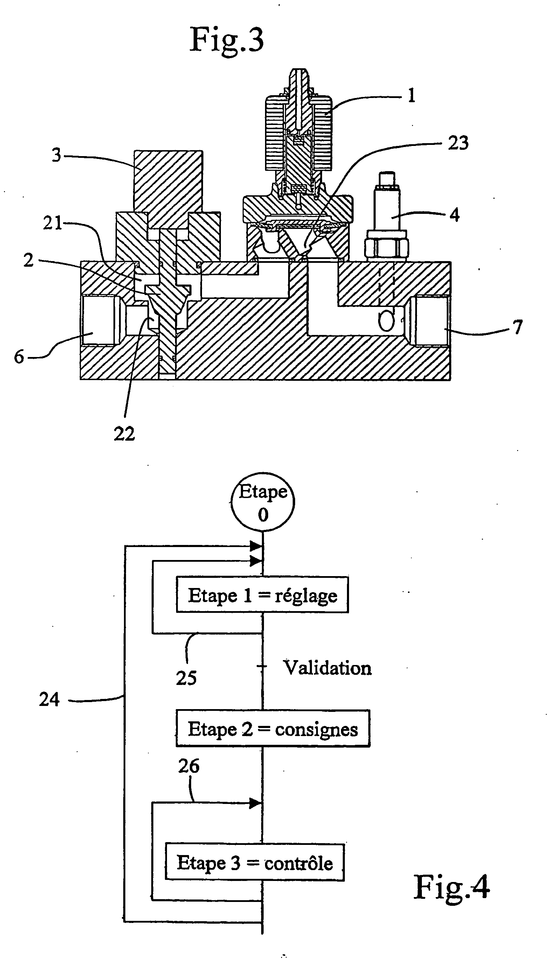

La figure 3 illustre plus précisément la structure d'un dispositif selon l'invention. L'actionneur 3 est un moteur linéaire pas à pas qui permet le déplacement transversal d'une tige agissant sur le réglage de la restriction 2. Pour éviter d'avoir à utiliser un moteur très puissant dans le cas de la présence de gaz à forte pression dans le dispositif, il est prévu un équilibrage des forces de pression de part et d'autre de la restriction, dans les chambres 21 et 22, pour éviter qu'une éventuelle forte pression ne s'oppose au mouvement du moteur. De plus, bien qu'il soit préconisé de mettre le moteur en mode économique par une diminution de son alimentation pour éviter les échauffements dans les phases durant lesquelles il n'est pas actionné, il sera mis en mode de pleine énergie durant la phase de pré-soufflage pour garantir un bon maintien du réglage de la restriction, le moteur remplissant alors une fonction de freinage, s'opposant aux forces de pression s'appliquant durant cette phase. En variante de réalisation, tout actionneur linéaire pourrait convenir sans sortir du concept de l'invention.

De plus, l'électrovanne 1 est équipée d'un clapet anti-retour 23 pour éviter une circulation de gaz dans un sens contraire en cas d'inversion des forces de pression entre l'entrée et la sortie du dispositif, dans les cas où le dispositif est par exemple utilisé avec deux sources en entrée, de basse et haute pressions.

Le dispositif de l'invention apporte aussi un avantage dans la phase d'initialisation, par exemple suite à sa première utilisation (étape 0) ou un changement de son environnement (retour 24), comme cela est illustré en figure 4. En effet, le dispositif transmet les données de mesure de pression à l'extérieur par la liaison 11, ce qui permet à un opérateur de connaître la courbe réelle de montée de pression à chaque essai et d'améliorer ses réglages (étape 1) par plusieurs itérations (flèche 25). Lorsqu'un essai est concluant et validé, il est possible d'imposer un réglage initial ou consignes de la restriction, du temps mort, et du temps de fermeture par une entrée manuelle de ces données dans le dispositif de commande 5 (étape 2). Le dispositif peut alors entrer en mode de fonctionnement contrôlé (étape 3) itératif (flèche 26), tel que décrit ci-dessus.

L'invention concerne aussi un procédé de pré-soufflage pour la fabrication de bouteilles, qui comprend pour chaque phase de pré-soufflage les étapes suivantes :

- mesure du temps réel initial t2;
- mesure de la pente de la montée de pression ;
- mesure de la pression finale de pré-soufflage.

Puis entre chaque phase de pré-soufflage, le procédé comprend les étapes suivantes :

- comparaison des trois mesures précédentes avec un historique et réajustement automatique en cas de déviation.

Ainsi, le dispositif à électrovanne décrit ci-dessus permet bien d'atteindre les objets recherchés. Il détecte de manière autonome les écarts de son comportement dans le temps et réajuste de manière autonome les consignes données initialement afin de conserver un comportement constant, et garantir une courbe de pression ou de débit idéale.

L'invention a été exposée ci-dessus dans le cadre d'une application au soufflage de bouteilles en PET mais son concept peut tout aussi bien être mis en oeuvre dans toute autre application nécessitant la maîtrise de la création de profils de pression de manière répétée dans un volume déformable ou non. Par exemple, elle pourrait être mise en oeuvre dans tout élément de serrage pneumatique, comme un vérin ou une pince.

**Revendications**

**1.** Procédé de soufflage, **caractérisé en ce qu'**il comprend pour chaque phase de soufflage les étapes suivantes :

- mesure du temps réel initial par un capteur (4), transmission à un dispositif de commande (5) et enregistrement dans une mémoire (10);
- mesure de la pente de la montée de pression, transmission à un dispositif de commande (5) et enregistrement dans une mémoire (10);
- mesure de la pression finale de soufflage, transmission à un dispositif de commande (5) et enregistrement dans une mémoire (10);

et **en ce qu'**il comprend entre chaque phase de soufflage les étapes suivantes :

- comparaison des trois mesures précédentes par un logiciel (9) du dispositif de commande (5) avec un historique enregistré dans la mémoire (10) et réajustement automatique en cas de déviation.

2. Procédé de soufflage selon la revendication 1, **caractérisé en ce qu'**il comprend la mesure périodique de la pression par un capteur (4) de pression, la transmission des valeurs vers le dispositif de commande (5) et le stockage de certaines de ces valeurs ainsi que le temps associé.

3. Procédé de soufflage selon la revendication 1 ou 2, **caractérisé en ce qu'**il comprend les étapes initiales suivantes :

   - signal de commande d'ouverture transmis à un dispositif à électrovanne ;
   - signal de commande d'ouverture transmis par un dispositif de commande à l'électrovanne après un temps mort déterminé ;

   et **caractérisé en ce qu'**un réajustement du temps mort est réalisé pour assurer une durée constante entre le signal de commande d'ouverture du système extérieur et l'instant réel de début de la phase de pré-soufflage.

4. Procédé de soufflage selon l'une des revendications 1 à 3, **caractérisé en ce qu'**un réajustement en cas de déviation de la pente de la courbe de pression consiste en un ordre transmis par le dispositif de commande (5) à un actionneur linéaire (3) afin de modifier le réglage d'une restriction (2).

5. Procédé de soufflage selon l'une des revendications 1 à 4, **caractérisé en ce qu'**un réajustement en cas de déviation de la pression finale de soufflage consiste en la modification de l'instant de transmission de l'ordre de fermeture de l'électrovanne.

6. Procédé de fabrication des bouteilles en PET, **caractérisé en ce qu'**il comprend un procédé de soufflage selon l'une des revendications 1 à 5.

7. Dispositif à électrovanne comprenant une entrée (6) alimentée par une source de gaz, ce gaz traversant une électrovanne (1) et une restriction (2), le dispositif comprenant de plus un capteur de pression (4) relié (14) à un dispositif de commande (5), une liaison (15) entre le dispositif de commande (5) et l'électrovanne (1) pour lui transmettre un signal d'ouverture et/ou de fermeture, une liaison (13) entre le dispositif de commande (5) et un actionneur (3) de la restriction (2) pour lui transmettre un signal de réglage automatique de la restriction (2), **caractérisé en ce que** le dispositif de commande (5) est adapté à la mise en oeuvre le procédé de soufflage selon l'une des revendications précédentes.

8. Dispositif à électrovanne selon la revendication 7, **caractérisé en ce que** le dispositif de commande (5) comprend un microprocesseur (8) apte à mettre en oeuvre un logiciel de contrôle (9) et une mémoire (10) apte à stocker un historique des valeurs mesurées.

9. Dispositif à électrovanne selon la revendication 8, **caractérisé en ce que** le dispositif de commande (5) comprend une liaison (11) avec l'extérieur apte à recevoir un signal de commande d'ouverture.

10. Dispositif à électrovanne selon l'une des revendications 7 à 9 **caractérisé en ce que** la restriction (2) comprend un moyen d'équilibrage de pression favorisant l'action de l'actionneur (3).

11. Dispositif à électrovanne selon l'une des revendications 7 à 10 **caractérisé en ce que** l'actionneur (3) est un moteur pas à pas linéaire.

12. Dispositif à électrovanne selon l'une des revendications 7 à 11 **caractérisé en ce que** l'électrovanne comprend un claper anti-retour (23).


**Claims**

1. A blowing method, **characterized in that** it includes, for each blowing phase, the following steps:

   - measurement of the initial actual time by a sensor (4), with transmission to a control device (5) and recording in a memory (10);

- measurement of the pressure increase slope, with transmission to a control device (5) and recording in a memory (10);
- measurement of the blowing final pressure, with transmission to a control device (5) and recording in a memory (10);

and **in that** it includes the following steps between each blowing phase:
- comparison, by a software (9) of the control device (5), of the three previous measurements with a history recorded in the memory (10) and automatic readjustment in the case of deviation.

2. The blowing method according to Claim 1, **characterized in that** it includes the periodic measurement of the pressure by a pressure sensor (4), the transmission of the values to the control device (5) and the storage of some of these values as well as the associated time.

3. The blowing method according to Claim 1 or 2, **characterized in that** it includes the following initial steps:

   - opening control signal transmitted to a solenoid valve device;
   - opening control signal transmitted by a control device to the solenoid valve after a determined idle time;

   and **characterized in that** a readjustment of the idle time is undertaken to ensure a constant duration between the opening control signal from the exterior system and the actual start time of the preblowing phase.

4. The blowing method according to one of Claims 1 to 3, **characterized in that** a readjustment, in the case of deviation of the pressure curve slope, consists in a command transmitted by the control device (5) to a linear actuator (3) so as to modify the setting of a choke (2).

5. The blowing method according to one of Claims 1 to 4, **characterized in that** a readjustment, in the case of deviation of the blowing final pressure, consists in modifying the moment of transmission of the command for closing the solenoid valve.

6. A manufacturing method for polyethylene terephthalate bottles, **characterized in that** it includes a blowing method according to one of Claims 1 to 5.

7. A solenoid valve device including an input (6) fed by a gas source, said gas passing through a solenoid valve (1) and a choke (2), the device including further a pressure sensor (4) connected (14) to a control device (5), a connection (15) between the control device (5) and the solenoid valve (1) for transmitting thereto an opening and/or closing signal, a connection (13) between the control device (5) and an actuator (3) for the choke (2) for transmitting thereto a signal for automatically setting the choke (2), **characterizes in that** the control device (5) is adapted is adapted to the implementation of the blowing method according to one of the preceding claims.

8. The solenoid valve device according to Claim 7, **characterized in that** the control device (5) includes a microprocessor (8) capable of implementing a control software (9) and a memory (10) capable of storing a history of the measured values.

9. The solenoid valve device according to Claim 8, **characterized in that** the control device (5) includes a connection (11) to the exterior capable of receiving an opening control signal.

10. The solenoid valve device according to one of claims 7 to 9, **characterized in that** the choke (2) includes a pressure equalizing means promoting the action of the actuator (3).

11. The solenoid valve device according to one of of claims 7 to 10, **characterized in that** the actuator (3) is a linear stepping motor.

12. The solenoid valve device according to one of of claims 7 to 1, **characterized in that** the solenoid valve includes a nonreturn valve (23).

**Patentansprüche**

1. Blasverfahren, **dadurch gekennzeichnet, dass** es bei jeder Blasphase die folgenden Schritte aufweist:

- Messung der Anfangs-Echtzeit durch einen Sensor (4), Übertragung an eine Steuervorrichtung (5) und Speicherung in einem Speicher (10);
- Messung der Steilheit des Anstiegs, Übertragung an eine Steuervorrichtung (5) und Speicherung in einem Speicher (10) ;
- Messung des Enddrucks des Blasvorgangs, Übertragung an eine Steuervorrichtung (5) und Speicherung in einem Speicher (10);
und dass zwischen jeder Blasphase die folgenden Schritte ausgeführt werden:
- Vergleich der drei vorhergehenden Messungen der Steuervorrichtung (5) mit einer im Speicher (10) abgelegten Vorgeschichte mit Hilfe einer Software (9) und automatische Nachstellung im Falle von Abweichungen.

2. Blasverfahren nach Anspruch 1, **dadurch gekennzeichnet, dass** es die periodische Messung des Drucks durch einen Drucksensor (4), die Übertragung der Werte nach der Steuervorrichtung (5) und das Speichern bestimmter Werte zusammen mit der zugehörigen Zeit umfasst.

3. Blasverfahren nach Anspruch 1 oder 2, **dadurch gekennzeichnet, dass** es die folgenden Eingangsschritte umfasst:

- Übertragung des Öffnungs-Steuersignals an eine Magnetventileinrichtung;
- Übertragung des Öffnungs-Steuersignals über eine Steuereinheit an das Magnetventil nach einer bestimmten Totzeit;

und **dadurch gekennzeichnet, dass** eine Nachstellung der Totzeit vorgenommen wird, um eine konstante Zeitdauer zwischen dem Öffnungs-Steuersignal des äusseren Systems und dem Echtzeitpunkt des Beginns der Vorblasphase sicherzustellen.

4. Blasverfahren nach einem der Ansprüche 1 bis 3, **dadurch gekennzeichnet, dass** im Falle einer Abweichung der Steigung der Druckkurve eine Nachstellung in einem Befehl besteht, welcher von der Steuereinheit (5) an einen Linearantrieb (3) gegeben wird, um die Einstellung eines Drosselventils (2) zu verändern.

5. Blasverfahren nach einem der Ansprüche 1 bis 4, **dadurch gekennzeichnet, dass** eine Nachstellung im Falle einer Abweichung des Endblasdrucks in einer Veränderung des Zeitpunkts der Übertragung des Befehls zum Schliessen des Magnetventils besteht.

6. Verfahren zur Herstellung von PET-Flaschen, **dadurch gekennzeichnet, dass** es ein Blasverfahren nach einem der Ansprüche 1 bis 5 umfasst.

7. Magnetventileinrichtung, mit einem Eingang (6), der von einer Gasquelle gespeist wird, wobei das Gas ein Magnetventil (1) und ein Drosselventil (2) durchströmt, und die Einrichtung ausserdem einen Drucksensor (4) aufweist, der mit einer Steuereinheit (5) verbunden ist (14); eine Verbindung (15) zwischen der Steuereinrichtung (5) und dem Magnetventil (1), um ihm ein Signal zum Öffnen und/oder Schliessen zu übermitteln; und eine Verbindung (13) zwischen der Steuereinrichtung (5) und einem Antrieb (3) des Drosselventils (2), um ihm ein Signal zur automatischen Steuerung des Drosselventils (2) zu übermitteln, **dadurch gekennzeichnet, dass** die Steuereinrichtung (5) zur Ausführung des Blasverfahrens nach einem der vorstehenden Ansprüche ausgestaltet ist.

8. Magnetventil-Einrichtung nach Anspruch 7, **dadurch gekennzeichnet, dass** die Steuereinrichtung (5) einen Mikroprozessor (8) aufweist, der zur Ausführung einer Steuersoftware (9) und zum Verwalten eines Speichers (10) eingerichtet ist, welcher eine Vorgeschichte der Messwerte zu speichern in der Lage ist.

9. Magnetventil-Vorrichtung nach Anspruch 8, **gekennzeichnet, dass** die Steuereinrichtung (5) eine Verbindung (11) mit der äusseren Umgebung aufweist, welche in der Lage ist, ein Öffnungs-Steuersignal aufzunehmen.

10. Magnetventil-Einrichtung nach einem der Ansprüche 7 bis 9, **dadurch gekennzeichnet, dass** das Drosselventil (2) ein Mittel zum Druckausgleich aufweist, welches den Betrieb des Antriebs (3) begünstigt.

11. Magnetventil-Einrichtung nach einem der Ansprüche 7 bis 10, **dadurch gekennzeichnet, dass** der Antrieb (3) ein linearer Schrittmotor ist.

12. Magnetventil-Einrichtung nach einem der Ansprüche 7 bis 11, **dadurch gekennzeichnet, dass** das Magnetventil ein Rückschlagventil (23) aufweist.

# Fig.1

# Fig.2

# Fig.3

# Fig.4